# EUROPEAN PATENT APPLICATION

(11) **EP 1 464 864 A2**
(43) Date of publication of application: **06.10.2004**
(21) Application number: 04380072.1
(22) Date of filing: 31.03.2004
(51) Int. Cl.: F16F 9/02

(54) **Multidirectional drive for gas cylinders**

(30) Priority: 01.04.2003 ES 200300760
(71) Applicant: GAIN GAS TECHNIQUE, S.L., 20100 Lezo (Gipuzkoa) (ES)
(72) Inventor: Barandiaran, Javier, 20001 San Sebastian (ES)
(74) Representative: Urteaga Simarro, José Antonio

(57) **Abstract**

Gas cylinder with two concentric bodies and an intermediate chamber, with a control rod (16) and gas passage valve (29) that withstands multidirectional drive action, enabling the drive action on an area that resembles a semi-sphere (18) and with the direction in which the executing force of the control action is applied proving immaterial, as it can be either on the rod (16) itself or on a device attached to its end with a blind hole or through hole.

## Description

This invention relates to a gas cylinder, of the type consisting of two concentric cylindrical bodies separated by an intermediate chamber and maintained in this position by two plugs, a valve plug and a shaft plug.

Passing through the valve plug is a valve shaft or control rod. Passing through the shaft plug, in turn, is the cylinder shaft, which has a head by way of a piston that delimits two chambers, one above it and the other below it.

The gas occupies the two chambers delimited by the said head, and passes, when the control rod is operated from the exterior, from one chamber to the other by means of communicating passages that exist in both plugs. This transfer of gas brings about the movement of the head and the cylinder shaft along the cylindrical inner body.

A cylinder with these characteristics can be seen in reference P200002672, belonging to the applicant itself. In this invention, the operation of the valve, carried out by means of the control rod with the aim of enabling the passage of the gas, is carried out in either a lateral direction (perpendicular to the axis of the rod) or in an axial direction (parallel to the axis of the rod). Both forms of operation or drive can not be performed simultaneously.

In practice, there are applications which demand that the gas cylinder can withstand multidirectional drive, i.e., not only axial drive and lateral drive separately, but also oblique or slanting drive, resulting from the combination of both.

One objective of the invention is to provide a gas cylinder that withstands, in order to activate the passage of gas, a multidirectional drive: in either an axial, lateral or oblique direction (as a result of combining an axial drive factor with a lateral drive factor).

Another objective of the invention is to provide the cylinder with a device that facilitates the multidirectional drive of the control rod.

In order to achieve these objectives, the invention focuses on the design of the gas passage valve of the cylinder and of the control rod, and on the way the latter is operated.

Firstly, the gas passage valve must enable movement in both an axial and in a lateral direction, as well as both simultaneously. In order to do this, the valve is divided into three parts: an upper valve device, a middle one and a lower one, with the corresponding sealing gaskets to prevent the gas from leaking to the exterior. The upper valve device has an internal diameter whose size enables the axial movement and the lateral movement of the rod, while limiting the latter. The interior of the middle valve device houses a ring seal that also provides support for the rod when there is a lateral drive factor, so that the rod, on turning, does so in relation to this point. The lower valve device, in addition to having an internal diameter greater than the diameter of the rod, so as not to interfere with its movements, opens out on its lower side in a conical manner, with this opening forming the gas passage area when the rod is operated.

The inner end of the control rod for operating the cylinder has a taper or neck to enable the insertion of a trunco-conical gas passage bushing, a gas passage gasket and a washer, which are all fixed to the rod itself by means of a rivet.

Thanks to this design, it is possible to carry out an operation on the projecting upper end of the rod without a direction limit, on an area that resembles a semi-spherical surface of an indefinite size.

With the aim of facilitating this multidirectional drive, a control device can be attached to the projecting upper end of the rod, with this control device having a surface shape that resembles a semi-spherical surface. This surface makes it possible to carry out the drive operation comfortably in any oblique, axial or transversal direction.

Two control device alternatives are presented, depending on the type of attachment to the rod: a device with a blind hole and a device with a through hole. In the first alternative, the rod is inserted into a blind hole in the device and therefore does not pass completely through it. In the second alternative, the rod is inserted into a through hole and therefore projects out through the other end after passing through the control device.

All these and other details of the invention can be appreciated in greater detail by consulting the attached figures, which show the following:
- Figure 1 shows a cross section elevation of a gas cylinder with multidirectional drive.
- Figure 2 shows several cross section elevations of the invention: at rest, with lateral, vertical and oblique drive.
- Figure 3 shows a cross section breakdown of the control rod and of the gas passage valve.
- Figure 4 shows a cross section elevation of the already assembled gas passage valve.
- Figure 5 shows a perspective view of a control device with a through hole, as well as a cross section elevation of the said device attached to the control rod.
- Figure 6 shows a perspective view of a control device with a blind hole, as well as a cross section elevation of the way of attached the said device to the control rod.

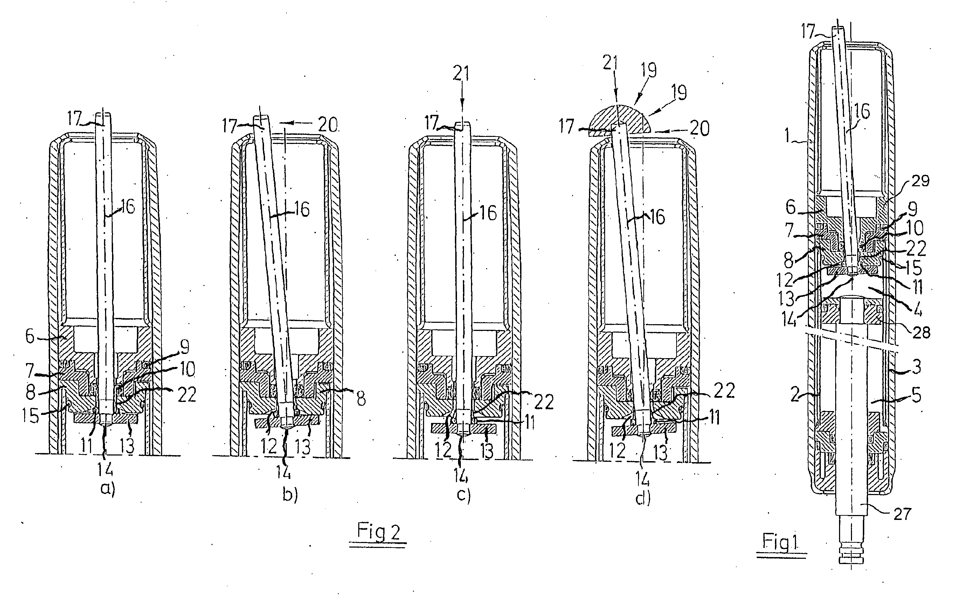

Figure 1 represents a gas cylinder consisting of two bodies and with multidirectional drive, in accordance with the invention. The structure of the cylinder is based mainly on the existence, on the one hand, of two concentric cylindrical bodies (1, 2), which house an intermediate gas passage chamber (3) between them, and, on the other hand, of a shaft (27) whose head (28) delimits an upper gas chamber (4) and another lower gas chamber (5). The basic operation of the cylinder is as follows: when the control rod (16) is operated, a gas passage between the upper gas chamber (4) and the lower gas chamber (5) opens, bringing about the movement of the shaft (27) and its head (28) in an axial direction.

The invention concentrates on the drive system, defined by a control rod (16) and a gas passage valve (29) to control the movement of the rod, the gas passage between chambers and the leak-tightness. The valve is composed of three main parts: an upper valve device (6), a middle valve device (7) and a lower valve device (8). Gas leaks between these and the chambers are prevented by fitting sealing gaskets (9, 10, 15). The control rod (16) passes through the above-mentioned devices and its lower end is inserted through a trunco-conical gas passage bushing (22), a gas passage gasket (11) and a washer (13), with these items remaining fixed by means of a rivet (14) formed on the rod end itself.

In this Figure it can be observed that when the drive control rod is moved, a gas passage area (12) is created between the lower valve device (8) and the gas passage gasket (11), initiating the operation of the cylinder in the way previously explained.

The control rod (16) is moved by carrying out some kind of drive operation on its projecting end (17).

In Figure 2, different cross sections of the invention are presented, depending on the type of drive operation carried out on the control rod (16).

In Figure 2.a, the gas cylinder is shown in its rest position, i.e. the control rod (16) is not undergoing any kind of movement. In this situation of lack of drive action, the rest position of the washer (13) is such that there is a small tolerance between this washer and the lower valve device (8) whose purpose is to enable the washer to rotate as shown in Figure 2.b. The gas passage gasket (11), on the contrary, makes firm contact with the lower valve device (8) and completely closes off the gas passage area (12) of the valve (29), thereby preventing the passage of gas between the internal chambers.

In Figure 2.b, a lateral drive action is applied to the control rod (16), by operating its projecting end (17). As can be observed in the Figure, this produces a gyrating movement of the rod. The consequence of this gyrating movement, at the lower part of the rod, is the appearance of a gas passage area (12) between the washer (13) and the lower valve device (8). The washer does not oscillate but rather moves at the same time as the rod, and is secured firmly to it, thanks to the rivet fixing (14) and to the presence of the trunco-conical bushing (22) and of the gas passage gasket (11) on the lower end (26) of the rod. In this case, the gas passage area (12) does not appear around the entire perimeter of the control rod (16), but rather is concentrated on the side opposite to the origin of the lateral drive action (20).

In Figure 2.c, a vertical drive action is applied onto the projecting end (17) of the control rod (16), which causes a displacement of the rod in an axial direction and towards the interior of the cylinder. The lower end (26) and the items fixed to it (22, 11, 13) become slightly separated from the lower valve device (8), creating a gas passage area (12) through the valve (29). In this case, the gas passage area is evenly and symmetrically distributed around the shaft of the control rod (16).

Figure 2.d shows the case in which an oblique drive action (19) is carried out on the projecting end (17) of the control rod (16) in an area that resembles a semi-spherical surface. This oblique drive action (19) can be broken down into a lateral drive factor (20) and another axial drive factor (21). As a result, its effect also proves to be a combination of the separate effects of each one of its drive factors (Figures 2.b and 2.c). In this way, a gas passage area (12) is created between the washer (13) and the lower valve device (8) which, as a result of the combination mentioned, surrounds the control rod (16), although not symmetrically but rather is concentrated on the side opposite to the origin of the oblique drive action (19).

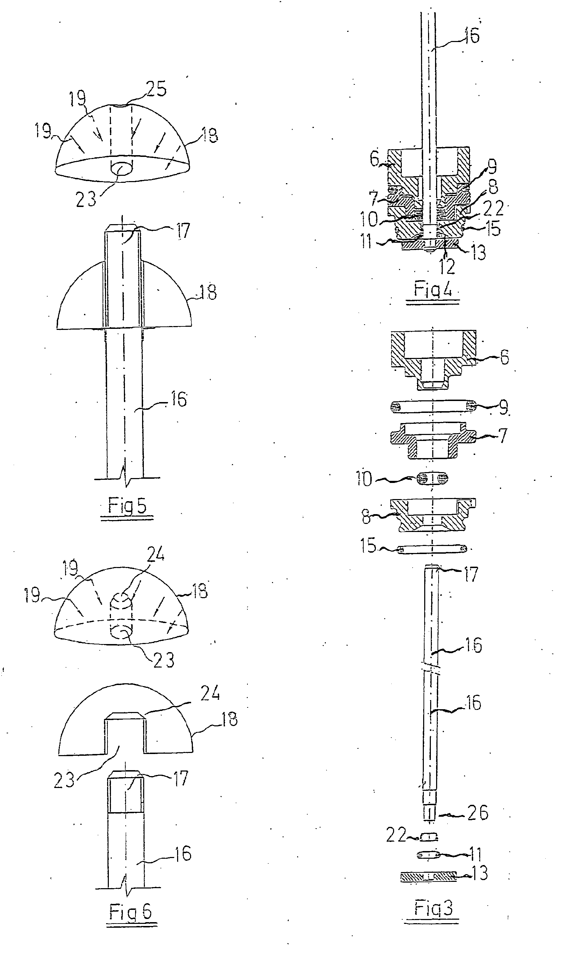

In Figures 3 and 4, a breakdown and an already assembled elevation of the drive system can be observed, i.e. of the assembly formed by the control rod (16) and the parts assembled onto it: the upper valve device (6), a sealing gasket (9), the middle valve device (7), a sealing gasket (10), the lower valve device (8), a sealing gasket (15), the trunco-conical bushing (22), the gas passage gasket (11) and the washer (13). When the system is assembled as shown in Figure 4, it can be appreciated that a gas passage area (12) remains defined between the items (8, 11, 13, 22).

A device whose surface forms an area that resembles a semi-spherical surface (18) is assembled onto the control rod (16), with the aim of facilitating the multidirectional drive (19, 20, 21) of the rod. Figures 5 and 6 show two alternative ways in which the said device can be attached.

Figure 5 shows the perspective view of a semi-spherical control device with a through hole (25). This device is attached to the control rod (16) by inserting the rod through the hole (23) in the device until the projecting end (17) protrudes through the upper part.

Figure 6 shows a perspective view of a variant semi-spherical control device, which in this case is a semi-spherical control device with a blind hole (24). This device is attached to the control rod (16) by inserting the rod through the hole (23) in the device, with the projecting end (17) remaining lodged in its interior.

## Claims

1. Multidirectional drive for the control rod (16) of the gas passage valve (29) in gas cylinders, consisting of two concentric bodies (1, 2) and an intermediate chamber (3), **characterised in that**:
- The drive action area of the control rod (16) resembles a semi-spherical surface (18) whose centre corresponds to a point on the symmetry axis of the control rod (16) in its rest situation (Figure 2.a).
- the direction of the force to be applied (19, 20, 21) on the area that resembles a semi-spherical surface (18) is multidirectional, since it is not necessary for it to be exclusively in the direction of the shaft of the rod (21) or lateral to it (20), but is extendable to any of the points (19, 20, 21) of the area that resembles a semi-spherical surface (18).

2. Multidirectional drive for the control rod (16) of the gas passage valve (29) in gas cylinders, in accordance with claim 1, **characterised in that** it uses the design of the valve device (6, 7, 8) with its sealing gaskets (10, 11) to operate, without limits, the oblique drive action movement direction (19, 20, 21) of the control rod (16) on the area that resembles a semi-spherical surface (18) of an indefinite size.

3. Multidirectional drive for the control rod (16) of the gas passage valve (29) in gas cylinders, in accordance with claims 1 and 2, **characterised in that** semi-spherical devices (18) which have holes (23) of the blind type (24) can be used.

4. Multidirectional drive for the control rod (16) of the gas passage valve (29) in gas cylinders, in accordance with claims 1 and 2, **characterised in that** semi-spherical devices (18) with hole (23) of the through type (25) can be used.

5. Multidirectional drive for the control rod (16) of the gas passage valve (29) in gas cylinders, in accordance with claims 1, 2 and 4, **characterised in that** the projecting end (17) of the control rod (16) for the valve enables operation to be carried out by any device inside an area that resembles a semi-spherical surface (18).
